# EUROPEAN PATENT SPECIFICATION

(11) **EP 4 422 347 B1**
(45) Date of publication and mention of the grant of the patent: **26.11.2025**
(21) Application number: 23158327.9
(22) Date of filing: 23.02.2023
(51) Int. Cl.: H05B 3/06, H05B 3/48, F24H 3/04

(54) **HEATING DEVICE**
HEIZEINRICHTUNG
DISPOSITIF DE CHAUFFAGE

(43) Date of publication of application: 28.08.2024
(73) Proprietor: VALEO SYSTEMES THERMIQUES, 78320 Le Mesnil Saint-Denis (FR)
(72) Inventor: KOZICKA, Jan, 10800 Prague (CZ); LEON VALENZUELA, David, 10800 Prague (CZ)
(74) Representative: Valeo Powertrain Systems

(56) References cited:
- EP-A1- 3 334 245
- EP-A1- 3 843 502
- EP-A2- 2 280 232
- DE-U1- 9 306 773

## Description

### Technical field

The invention relates to a heating device for heating a coolant. The heating device is in particular intended for a vehicle, such as an automotive vehicle, for example for a heating air of a passenger compartment of the vehicle. The vehicle may be an electric or hybrid vehicle. The vehicle may be autonomous.

### Background Art

The air of the passenger compartment is generally heated by using a heat exchanger to transfer heat between a flow of air and a coolant, for example a liquid. For hybrid or electric vehicles, the coolant is heated by a heating device in which an electric current is circulated in at least one resistor placed in contact with the coolant, so that a temperature of the resistor increases, thereby heating the coolant. EP2280232, EP3843502 and EP3334245 disclose heating devices according to the prior art.

In this context, it is known to use a heating device comprising:
- a heating chamber provided with a coolant inlet for letting coolant enter and a coolant outlet for letting the coolant exit;
- a resistor located inside the heating chamber for heating the coolant, the resistor comprising a terminal passing through a wall of the heating chamber; and
- a printed circuit board located outside the heating chamber for controlling the resistor.

The terminal needs to be connected to the printed circuit board, so that the resistor can be controlled by electronics present on the printed circuit board. The connection must be positioned precisely, in order to arrive at the correct location on the printed circuit board. However, due to space constraints, it is often not possible to use positioning pins.

It may thus be desirable to provide an object which makes it possible to overcome at least some of the aforementioned problems and constraints.

### Summary of the invention

It is therefore proposed a heating device comprising:
- a heating chamber provided with a coolant inlet for letting coolant enter and a coolant outlet for letting the coolant exit;
- a resistor located inside the heating chamber for heating the coolant, the resistor comprising a terminal passing through a wall of the heating chamber; and
- a printed circuit board located outside the heating chamber for controlling the resistor.
characterized in that the wall is provided with a positioning pin projecting outside the heating chamber and having a hole, and characterized in that it further comprises
- a connection module comprising:
   - a lead frame comprising a connection pin connected to the printed circuit board and a connector connected to the terminal of the resistor,
   - an overmolding around the lead frame, the overmolding having a trough-hole in which the positioning pin is inserted, and
   - a sleeve inserted into the through-hole next to the positioning pin; and
- a fixing element comprising a rod and a head, the rod being inserted into successively the sleeve and the hole of the positioning pin, so that the sleeve is clamped between the positioning pin and the head.

Thanks to the invention, the positioning and fixing functions are carried out by the same elements, namely the pierced positioning pin of the wall and the receiving through-hole of the overmolding of the connection module, which saves space.

The invention may also include one or more of the following optional features, in any technically possible combination.

Optionally, the wall is a removable cover covering an opening through which the resistor can be inserted into the heating chamber.

Also optionally, the fixing element is a screw or a rivet or a bolt.

Also optionally, the sleeve is made of steel.

Also optionally, inside the through-hole of the overmolding, the positioning pin extends at less than 0.2 mm from the overmolding in at least one direction transverse to a longitudinal direction of the positioning pin.

Also optionally, one amongst the positioning pin and the through-hole of the overmolding, has a truncated cone shape, while the other has a cylindrical shape.

Also optionally, the heating device further comprises a housing comprising the heating chamber and delimiting an inner space, in which the heating chamber extends.

Also optionally, the printed circuit board extends in the inner space.

It is also proposed a vehicle comprising a heating device according to the invention, in particular in an installation of the vehicle, for heating air of a passenger compartment of the vehicle.

It is also proposed a method for connecting, in a heating device, a terminal of a resistor located in a heating chamber provided with a coolant inlet for letting coolant enter and a coolant outlet for letting the coolant exit, the terminal passing through a wall of the heating chamber, to a printed circuit board located outside the heating chamber for controlling the resistor, characterized in that the wall is provided with a positioning pin projecting outside the heating chamber and having a hole, and in that the method comprises:
- fixing a connection module to the wall by inserting a positioning pin of the wall projecting outside the heating chamber into a through-hole provided in an overmolding around a lead frame of the connection module, while connecting the terminal to a connector of the lead frame;
- inserting a rod of a fixing element into successively a sleeve located inside the through-hole and a hole of the positioning pin, so that the sleeve is clamped between the positioning pin and a head of the fixing element located at an end of the rod; and
- fixing the printed circuit board to the heating chamber, while connecting a pin of the lead frame to the printed circuit board.

### Brief description of the drawings

The invention will be better understood using the following description, given solely by way of example and made with reference to the accompanying drawings in which:
- figure 1 is a three dimensional view of a heating device according to the invention,
- figure 2 is a three dimensional view of the heating device, with a top cover removed in order to reveal a printed circuit board,
- figure 3 is a three dimensional view of the heating device, with the printed circuit board removed in order to reveal a heating chamber,
- figure 4 is a three dimensional cross-sectional view of the heating device, showing resistors in the heating chamber,
- figure 5 is a three dimensional view of the heating device, with front covers removed in order to reveal terminals of the resistors passing through the heating chamber,
- figure 6 is a three dimensional view of part of the heating device, showing connection modules for connecting the terminals of the resistors to the printed circuit board,
- figure 7 is a three dimensional view of one of the connection modules, with an overmolding shown transparent,
- figure 8 is a three dimensional view of the other of the connection modules, with an overmolding shown transparent,
- figure 9 is a cross sectional view of a fixing mechanism for fixing the connection module to the front cover, and
- figure 10 is a block diagram illustrating steps of a method for connecting the terminals of the resistors to the printed circuit board.

### Description of embodiments of the invention

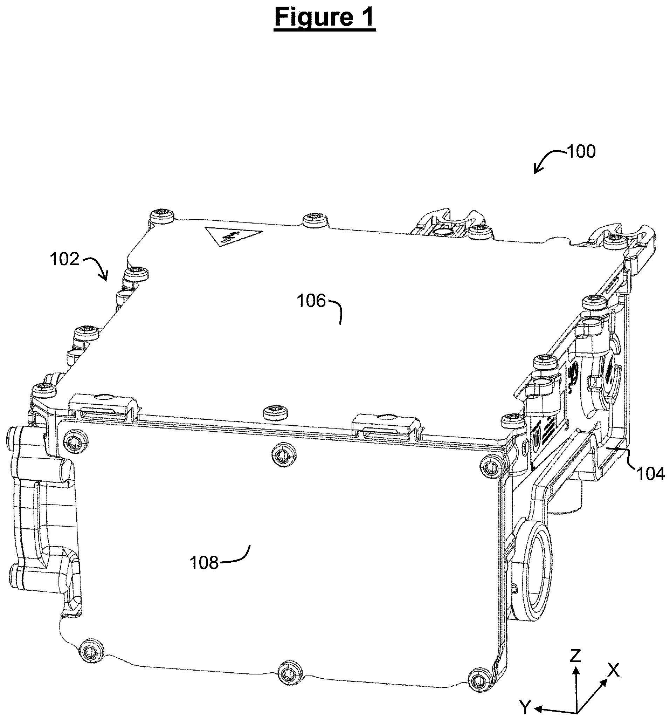

Referring to **figures 1 to 9****,** an example of a heating device 100 according to the invention, will now be described.

In the following description, elements of the heating device 100 will be described with respect to an arbitrary orthogonal set of axis X, Y, Z.

Referring to **figure 1**, the heating device 100 comprises a housing 102 with a main body 104 and an upper cover 106 and a front cover 108.

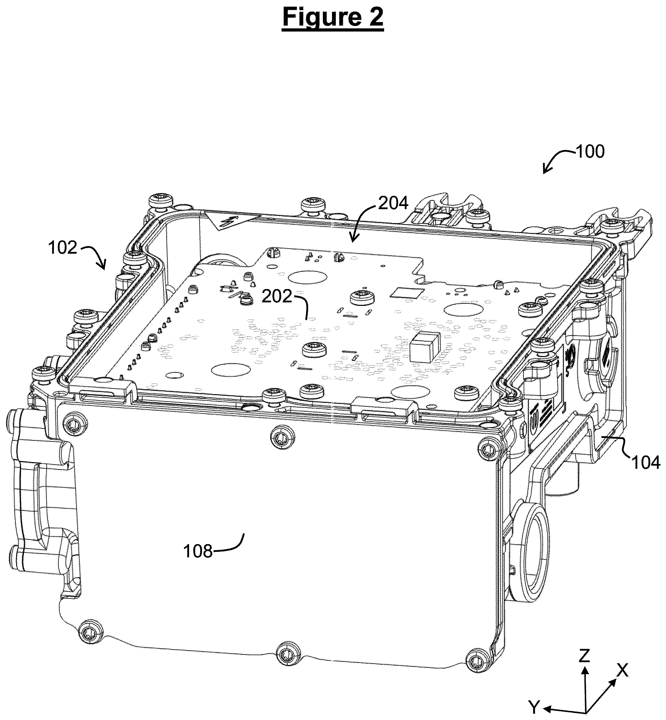

Referring to **figure 2****,** the heating device 100 further comprises a printed circuit board 202 extending into an inner space 204 defined by the housing 102.

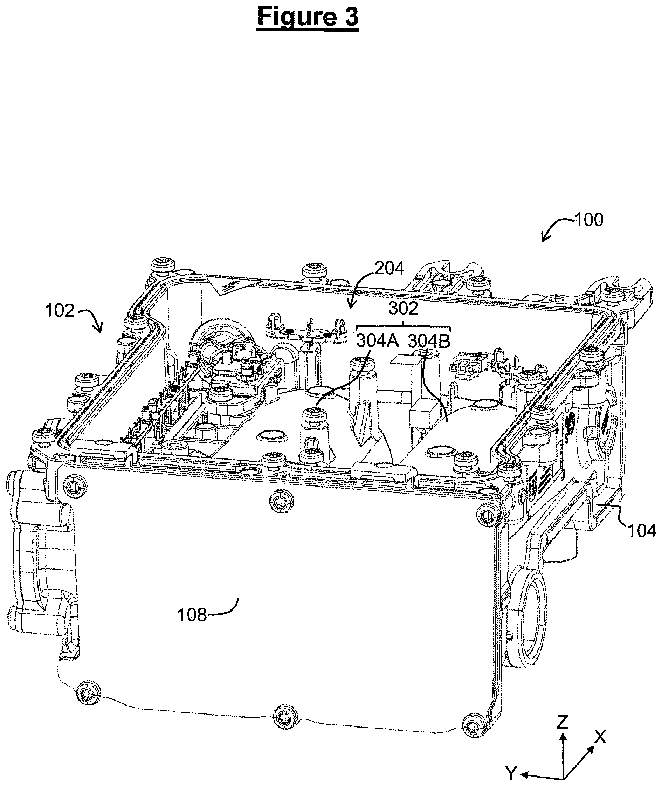

Referring to **figure 3****,** the heating device 100 further comprises a heating chamber 302 extending in the inner space 204 of the housing 102 and fixed to the housing 102, for example to its main body 104. For example, the heating chamber 302 comprises two compartments 304A, 304B.

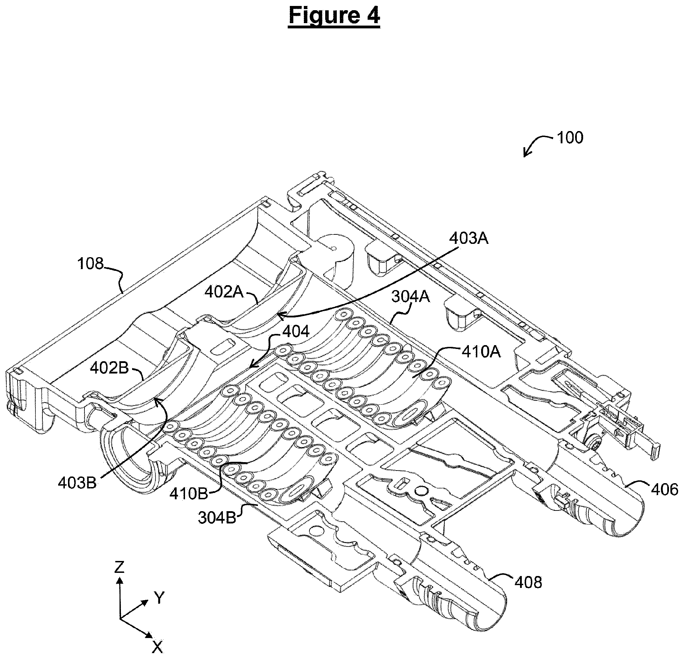

Referring to **figure 4****,** the heating chamber 302 comprises for example front covers 402A, 402B for respectively closing openings 403A, 403B of the compartments 304A, 304B, and a connection 404 for letting coolant pass between the compartments 304A, 304B.

The heating chamber 302 is further provided with a coolant inlet 406 for letting coolant enter and a coolant outlet 408 for letting the coolant exit. For example, the coolant inlet 406 is provided in the compartment 304A, while the coolant outlet is provided in the compartment 304B. With this configuration, the coolant enters by the coolant inlet 406 in the compartment 304A, pass to the compartment 304B through the connection 404 and exits the compartment 304B by the coolant outlet 408.

The heating device 100 further comprises at least one resistor 410A, 410B located inside the heating chamber 302 for heating the coolant. For example, one resistor 410A, 410B is provided in each compartment 304A, 304B. For example, the opening 403A, 403B are sized in order to allow passage of the resistors 410A, 410B, respectively.

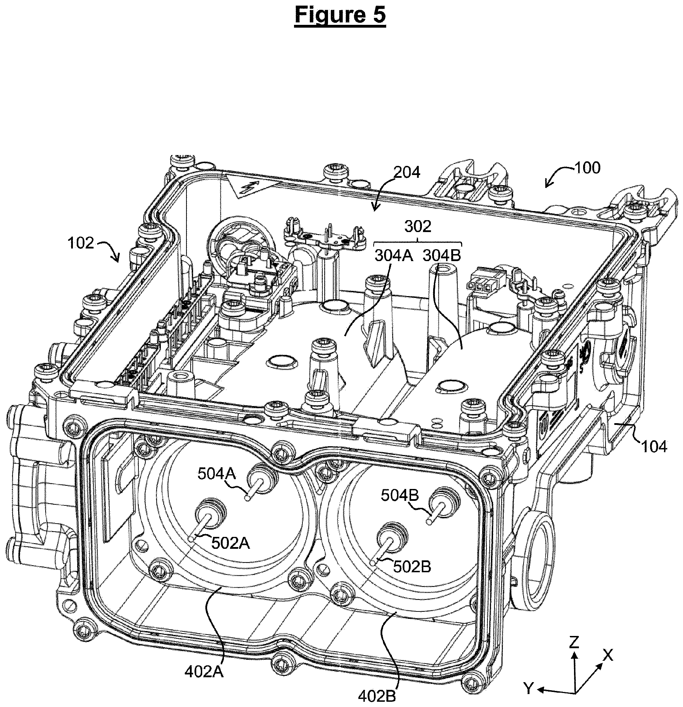

Referring to **figure 5****,** each resistor 410A, 410B comprises two terminals 502A, 504A, 502B, 504B for receiving electrical power. At least one of the two terminals 502A, 504A, 502B, 504B passes through a wall of the heating chamber 302. For example, both terminals 502, 504 pass through the cover 402A, 402B of the compartment 304A, 304B in which lies the resistor 410A, 410B.

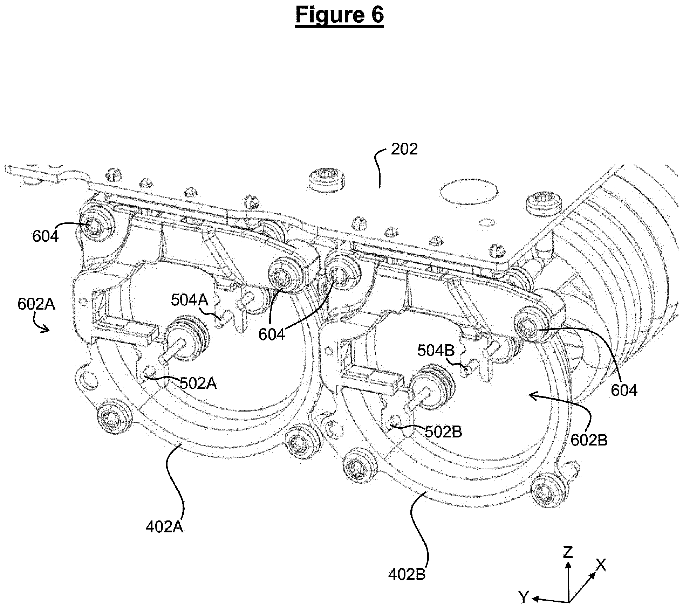

Referring to **figure 6****,** the heating device 100 comprises, for each resistor 410A, 410B, a connection module 602A, 602B for connecting at least one of the two terminals 502A, 504A, 502B, 504B of the resistor 410A, 410B to the printed circuit board 202. Each connection module 602A, 602B is fixed to the housing, for example to the associated cover 402A, 402B, by at least one fixing element such as a screw 604.

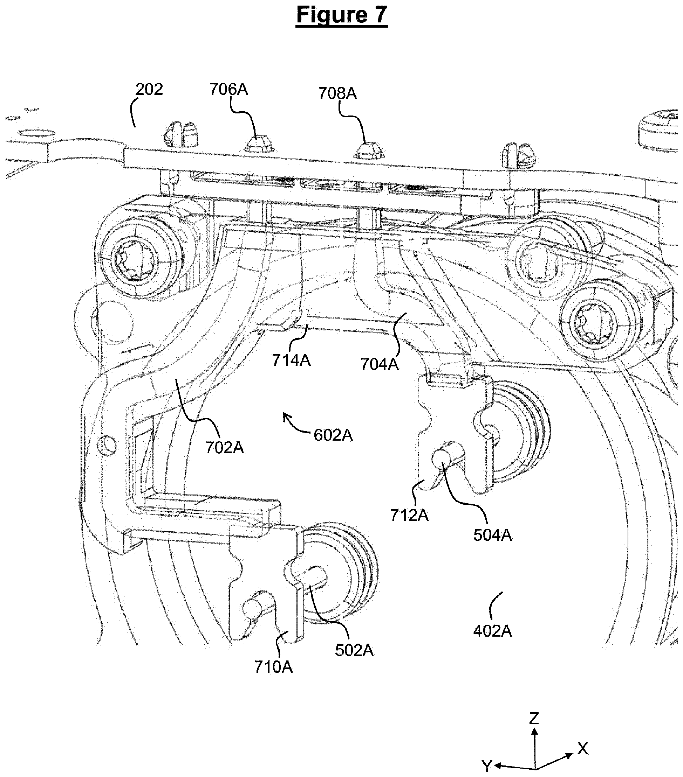

Referring to **figure 7****,** the connection module 602A comprises, for each of the two terminals 502A, 504A, a lead frame 702A, 704A. Each lead frame 702A, 704A comprises one connection pin 706A, 708A connected to the printed circuit board 202, for example passing through a respective hole provided in the printed circuit board 202. Each lead frame 702A, 704A further comprises a connector 710A, 712A connected to the terminal 502A, 504A. For example each connector 710A, 712A comprises a clamp for clamping the associated terminal 502A, 504A. The connection module 602A further comprises an overmolding 714A around the lead frames 702A, 704A.

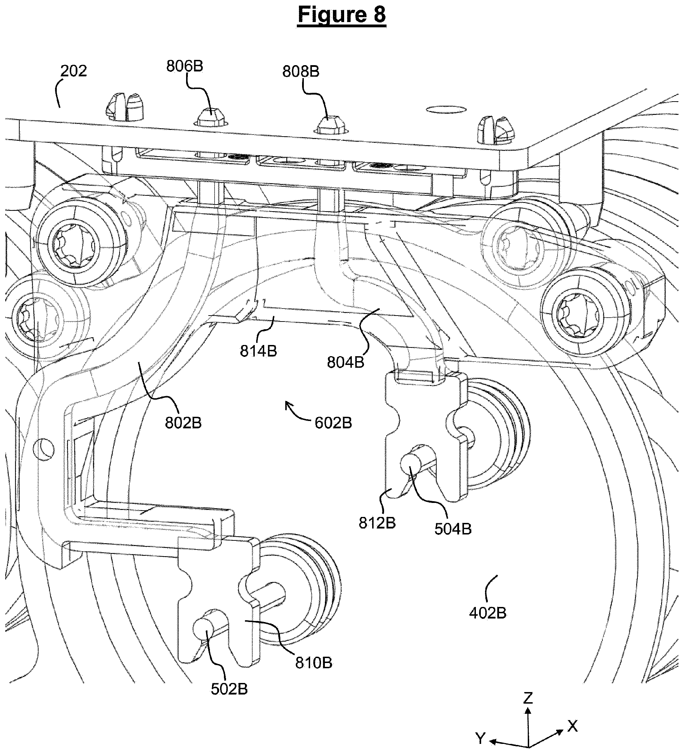

Similarly, Referring to **figure 8****,** the connection module 602B comprises, for each of the two terminals 502B, 504B, a lead frame 802B, 804B. Each lead frame 802B, 804B comprises one connection pin 806B, 808B connected to the printed circuit board 202, for example passing through a respective hole provided in the printed circuit board 202. Each lead frame 802B, 804B further comprises a connector 810B, 812B connected to the terminal 502B, 504B. For example each connector 810B, 812B comprises a clamp for clamping the associated terminal 502B, 504B. The connection module 602B further comprises an overmolding 814B around the lead frames 802B, 804B.

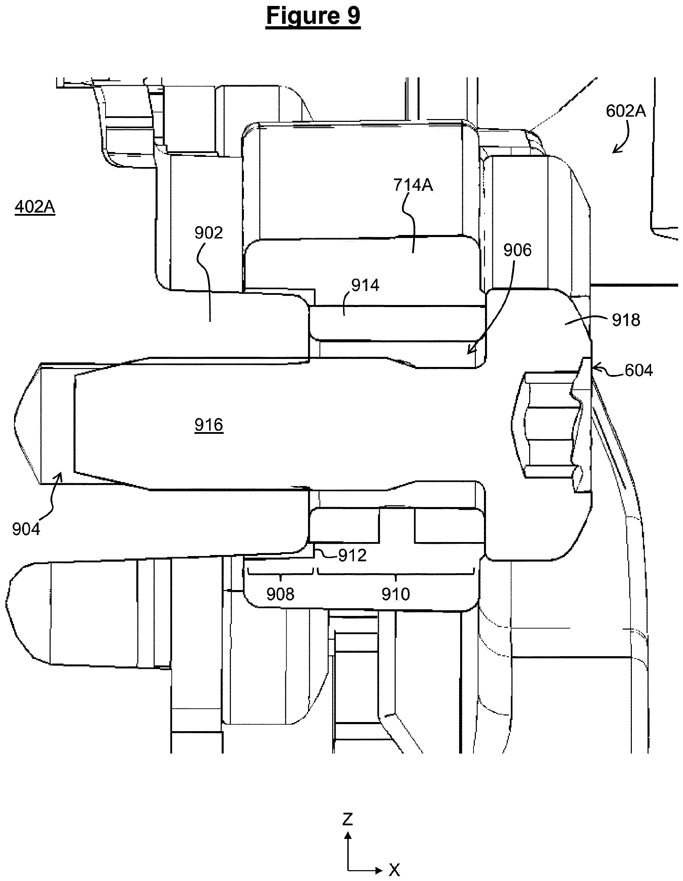

Referring to **figure 9****,** fixing of the cover 402A by means of the fixating element 604 will now be described in greater detail. Fixing of cover 402B by means of the fixating elements 604 is similar.

The cover 402A is provided with a positioning pin 902 projecting outside the heating chamber 302 and having a hole 904. More precisely, the positioning pin 902 extends along a longitudinal direction, which is the X direction in the illustrated example.

The overmolding 714A has a positioning trough-hole 906 in which the positioning pin 902 is inserted. For example, the positioning trough-hole 906 comprises a first section 908 and a second section 910 connected to each other by an inner shoulder 912, so that the first section 908 has a diameter greater than a diameter of the second section 910. The positioning pin 902 may then be inserted into the first section 908, the inner shoulder 912 forming a stop for the positioning pin 902.

Inside the through-hole 906 of the overmolding 714A, the positioning pin 902 extends preferably at less than 0.2 mm from the overmolding 714A, 814B in at least one direction transverse to a longitudinal direction Z of the positioning pin 902, preferably in all transverse directions. In the illustrated example, the transverse directions are in the plane defined by directions Y and Z.

Also preferably, one amongst the positioning pin 902 and the through-hole 906 of the overmolding 714A, has a truncated cone shape, while the other has a cylindrical shape. In the illustrated example, the positioning pin 902 has the truncated cone shape, and the first section 908 of the through-hole 906 of the overmolding has a cylindrical shape. This helps guide the insertion of the positioning pin 902 inside the through-hole 906.

The connection module 602A further comprises a sleeve 914 inserted, for example pressed-in, into the positioning through-hole 906 next to the positioning pin 902. For example, the sleeve 914 is inserted into the second section 912. For example, the sleeve 914 is made of steel, in order to be more rigid than the overmolding 714A.

The fixing element, i.e. the screw 604 in the described example, comprises a rod 916 and a head 918 fixed to a end of the rod 916. The rod 916 is successively inserted into the sleeve 914 and the hole 904 of the positioning pin 902, so that the sleeve 914 is clamped between the positioning pin 902 and the head 918.

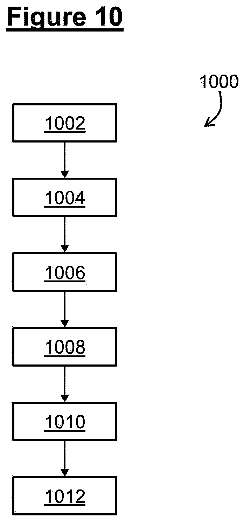

Referring to **figure 10****,** a method 1000 for connecting the terminals to the circuit board will now be described.

At a step 1002, the housing 102 with the heating chamber 302 is obtained, with the covers 402A, 402B and the printed circuit board 202 separated.

At a step 1004, each resistor 410A, 410B is inserted into its respective compartment 304A, 304B trough the respective opening 403A, 403B.

At a step 1006, each cover 402A, 402B is fixed to the heating chamber 302 to close the associated opening 403A, 403B, while letting the terminals 502A, 504A, 502B, 504B pass trough the cover 402A, 402B.

At a step 1008, each connection module 602A, 602B is temporarily fixed to the associated cover 402A, 402B by inserting the positioning pin 902 of the cover 402A, 402B into the through hole 906, into its first section 908 in the described example, of the connection module 602A, 602B. At the same time, the terminals 502A, 504A, 502B, 504B are respectively clamped by the connectors 502A, 504A, 502B, 504B.

At a step 1010, the fixing elements, i.e. the screws 604, are installed so as to fix the connection modules 602A, 602B to the covers 402A, 402B, respectively.

At a step 1012, the printed circuit board 202 is fixed to the housing 102, for example by screwing, for example to the heating chamber 302, while connecting the pins 706A, 708B, 806B, 808B of the connection module 602A, 602B to the printed circuit board 202.

As a conclusion, it will be noted that the invention is not limited to the embodiments described above. It will indeed appear to those skilled in the art that various modifications can be made to the embodiments described above, in the light of the teaching which has just been disclosed to them.

In the detailed presentation of the invention which is made previously, the terms used must not be interpreted as limiting the invention to the embodiments set out in the present description, but must be interpreted to include therein all the equivalents within the reach of those skilled in the art by applying their general knowledge to the implementation of the teaching which has just been disclosed to them.

## Claims

1. Heating device (100) comprising:
- a heating chamber (302) provided with a coolant inlet (406) for letting coolant enter and a coolant outlet (408) for letting the coolant exit;
- a resistor (410A, 410B) located inside the heating chamber (302) for heating the coolant, the resistor (410A, 410B) comprising a terminal (502A, 504A, 502B, 504B) passing through a wall (402A, 402B) of the heating chamber (302); and
- a printed circuit board (202) located outside the heating chamber (302) for controlling the resistor (410A, 410B);
**characterized in that** the wall (402A, 402B) is provided with a positioning pin (902) projecting outside the heating chamber (302) and having a hole (904), and **in that** it further comprises:
- a connection module (602A, 602B) comprising:
• a lead frame (702A, 704A, 802B, 804B) comprising a connection pin (706A, 708A, 806A, 808A) connected to the printed circuit board (202) and a connector (710A, 712A, 810B, 812B) connected to the terminal (502A, 504A, 502B, 504B) of the resistor (410A, 410B),
• an overmolding (714A, 814B) around the lead frame (702A, 704A, 802B, 804B), the overmolding (714A, 814B) having a trough-hole (906) in which the positioning pin (902) is inserted, and
• a sleeve (914) inserted into the through-hole (906) next to the positioning pin (902); and
- a fixing element (604) comprising a rod (916) and a head (918), the rod (916) being inserted into successively the sleeve (914) and the hole (904) of the positioning pin (902), so that the sleeve (914) is clamped between the positioning pin (902) and the head (918).

2. Heating device (100) according to claim 1, wherein the wall (402A, 402B) is a removable cover covering an opening (403A, 403B) through which the resistor (410A, 410B) can be inserted into the heating chamber (302).

3. Heating device (100) according to claim 1 or 2, wherein the fixing element (604) is a screw or a rivet or a bolt.

4. Heating device (100) according to any of claims 1 to 3, wherein the sleeve (914) is made of steel.

5. Heating device (100) according to any of claims 1 to 4, wherein, inside the through-hole (906) of the overmolding (714A, 814B), the positioning pin (902) extends at less than 0.2 mm from the overmolding (714A, 814B) in at least one direction (X, Y) transverse to a longitudinal direction (Z) of the positioning pin (902).

6. Heating device (100) according to any of claims 1 to 5, wherein one amongst the positioning pin (902) and the through-hole (906) of the overmolding (714A, 814B), has a truncated cone shape, while the other has a cylindrical shape.

7. Heating device (100) according to any of claims 1 to 6, further comprising a housing (102) comprising the heating chamber (302) and delimiting an inner space (204), in which the heating chamber (302) extends.

8. Heating device (100) according to claim 7, wherein the printed circuit board (202) extends in the inner space (204).

9. Vehicle comprising a heating device (100) according to any of claims 1 to 8, in particular in an installation of the vehicle, for heating air of a passenger compartment of the vehicle.

10. Method (1000) for connecting, in a heating device (100) according to claims 1-8, a terminal (502A, 504A, 502B, 504B) of a resistor (410A, 410B) located in a heating chamber (302) provided with a coolant inlet (406) for letting coolant enter and a coolant outlet (408) for letting the coolant exit, the terminal (502A, 504A, 502B, 504B) passing through a wall (402A, 402B) of the heating chamber (302), to a printed circuit board (202) located outside the heating chamber (302) for controlling the resistor (410A, 410B), **characterized in that** the wall (402A, 402B) is provided with a positioning pin (902) projecting outside the heating chamber (302) and having a hole (904), and **in that** the method comprises:
- fixing (1008) a connection module (602A, 602B) to the wall (402A, 402B) by inserting a positioning pin (902) of the wall (402A, 402B) projecting outside the heating chamber (302) into a through-hole (906) provided in an overmolding (714A, 814B) around a lead frame (702A, 704A, 802B, 804B) of the connection module, while connecting the terminal (502A, 504A, 502B, 504B) to a connector (502A, 504A, 502B, 504B) of the lead frame (702A, 704A, 802B, 804B);
- inserting (1010) a rod (916) of a fixing element (604) into successively a sleeve (914) located inside the through-hole (906) and a hole (904) of the positioning pin (902), so that the sleeve (914) is clamped between the positioning pin (902) and a head (918) of the fixing element (604) located at an end of the rod (916); and
- fixing (1012) the printed circuit board (202) to the heating chamber (302), while connecting a pin (706A, 708B, 806B, 808B) of the lead frame (702A, 704A, 802B, 804B) to the printed circuit board (202).

## Patentansprüche

1. Heizvorrichtung (100), umfassend:
• eine Heizkammer (302), die mit einem Kühlmitteleinlass (406) zum Einlassen von Kühlmittel und einem Kühlmittelauslass (408) zum Auslassen des Kühlmittels versehen ist;
• einen Widerstand (410A, 410B), der sich innerhalb der Heizkammer (302) befindet, um das Kühlmittel zu erwärmen, wobei der Widerstand (410A, 410B) einen Anschluss (502A, 504A, 502B, 504B) aufweist, der eine Wand (402A, 402B) der Heizkammer (302) durchdringt;
• und
• eine Leiterplatte (202), die sich außerhalb der Heizkammer (302) befindet, um den Widerstand (410A, 410B) zu steuern;
**dadurch gekennzeichnet, dass** die Wand (402A, 402B) mit einem Positionierstift (902) versehen ist, der aus der Heizkammer (302) herausragt und ein Loch (904) aufweist, und **dadurch gekennzeichnet, dass** sie ferner umfasst:
• ein Verbindungsmodul (602A, 602B), umfassend:
∘ eine Anschlussstruktur (702A, 704A, 802B, 804B), die einen Verbindungsstift (706A, 708A, 806A, 808A), der mit der Leiterplatte (202) verbunden ist, und einen Verbinder (710A, 712A, 810B, 812B) umfasst, der mit dem Anschluss (502A, 504A, 502B, 504B) des Widerstands (410A, 410B) verbunden ist,
∘ eine Umspritzung (714A, 814B) um die Anschlussstruktur (702A, 704A, 802B, 804B), wobei die Umspritzung (714A, 814B) ein Durchgangsloch (906) aufweist, in das der Positionierstift (902) eingesetzt ist, und
∘ eine Hülse (914), die in das Durchgangsloch (906) neben dem Positionierstift (902) eingesetzt ist; und
• ein Befestigungselement (604), das einen Schaft (916) und einen Kopf (918) umfasst, wobei der Schaft (916) nacheinander in die Hülse (914) und das Loch (904) des Positionierstiftes (902) eingesetzt ist, so dass die Hülse (914) zwischen dem Positionierstift (902) und dem Kopf (918) eingeklemmt ist.

2. Heizvorrichtung (100) nach Anspruch 1, wobei die Wand (402A, 402B) ein abnehmbarer Deckel ist, der eine Öffnung (403A, 403B) abdeckt, durch die der Widerstand (410A, 410B) in die Heizkammer (302) eingesetzt werden kann.

3. Heizvorrichtung (100) nach Anspruch 1 oder 2, wobei das Befestigungselement (604) eine Schraube oder eine Niete oder ein Bolzen ist.

4. Heizvorrichtung (100) nach einem der Ansprüche 1 bis 3, wobei die Hülse (914) aus Stahl gefertigt ist.

5. Heizvorrichtung (100) nach einem der Ansprüche 1 bis 4, wobei sich der Positionierstift (902) innerhalb des Durchgangslochs (906) der Umspritzung (714A, 814B) in mindestens einer Richtung (X, Y) quer zu einer Längsrichtung (Z) des Positionierstiftes (902) weniger als 0,2 mm von der Umspritzung (714A, 814B) erstreckt.

6. Heizvorrichtung (100) nach einem der Ansprüche 1 bis 5, wobei eines von dem Positionierstift (902) und dem Durchgangsloch (906) der Umspritzung (714A, 814B) eine kegelstumpfförmige Form aufweist, während das andere eine zylindrische Form aufweist.

7. Heizvorrichtung (100) nach einem der Ansprüche 1 bis 6, ferner umfassend ein Gehäuse (102), das die Heizkammer (302) umfasst und einen Innenraum (204) begrenzt, in dem sich die Heizkammer (302) erstreckt.

8. Heizvorrichtung (100) nach Anspruch 7, wobei sich die Leiterplatte (202) in dem Innenraum (204) erstreckt.

9. Fahrzeug, umfassend eine Heizvorrichtung (100) nach einem der Ansprüche 1 bis 8, insbesondere in einer Installation des Fahrzeugs, zum Heizen von Luft eines Fahrgastraums des Fahrzeugs.

10. Verfahren (1000) zum Verbinden, in einer Heizvorrichtung (100) nach den Ansprüchen 1-8, eines Anschlusses (502A, 504A, 502B, 504B) eines Widerstands (410A, 410B), der sich in einer Heizkammer (302) befindet, die mit einem Kühlmitteleinlass (406) zum Einlassen von Kühlmittel und einem Kühlmittelauslass (408) zum Auslassen des Kühlmittels versehen ist, wobei der Anschluss (502A, 504A, 502B, 504B) eine Wand (402A, 402B) der Heizkammer (302) durchdringt, mit einer Leiterplatte (202), die sich außerhalb der Heizkammer (302) befindet, um den Widerstand (410A, 410B) zu steuern,
**dadurch gekennzeichnet, dass** die Wand (402A, 402B) mit einem Positionierstift (902) versehen ist, der aus der Heizkammer (302) herausragt und ein Loch (904) aufweist, und dadurch, dass das Verfahren umfasst:
• das Befestigen (1008) eines Verbindungsmoduls (602A, 602B) an der Wand (402A, 402B) durch Einsetzen eines Positionierstiftes (902) der Wand (402A, 402B), der aus der Heizkammer (302) herausragt, in ein Durchgangsloch (906), das in einer Umspritzung (714A, 814B) um eine Anschlussstruktur (702A, 704A, 802B, 804B) des Verbindungsmoduls vorgesehen ist, während der Anschluss (502A, 504A, 502B, 504B) mit einem Verbinder (502A, 504A, 502B, 504B) der Anschlussstruktur (702A, 704A, 802B, 804B) verbunden wird;
• das Einsetzen (1010) eines Schafts (916) eines Befestigungselements (604) nacheinander in eine Hülse (914), die sich innerhalb des Durchgangslochs (906) befindet, und ein Loch (904) des Positionierstiftes (902), so dass die Hülse (914) zwischen dem Positionierstift (902) und einem Kopf (918) des Befestigungselements (604), der sich an einem Ende des Schafts (916) befindet, eingeklemmt wird;
• und
• das Befestigen (1012) der Leiterplatte (202) an der Heizkammer (302), während ein Stift (706A, 708B, 806B, 808B) der Anschlussstruktur (702A, 704A, 802B, 804B) mit der Leiterplatte (202) verbunden wird.

## Revendications

1. Dispositif de chauffage (100) comprenant :
• une chambre de chauffage (302) pourvue d'une entrée de liquide de refroidissement (406) pour laisser entrer le liquide de refroidissement et d'une sortie de liquide de refroidissement (408) pour laisser sortir le liquide de refroidissement ;
• une résistance (410A, 410B) située à l'intérieur de la chambre de chauffage (302) pour chauffer le liquide de refroidissement, la résistance (410A, 410B) comprenant une borne (502A, 504A, 502B, 504B) traversant une paroi (402A, 402B) de la chambre de chauffage (302) ; et
• une carte de circuit imprimé (202) située à l'extérieur de la chambre de chauffage (302) pour commander la résistance (410A, 410B) ;
**caractérisé en ce que** la paroi (402A, 402B) est pourvue d'une broche de positionnement (902) faisant saillie à l'extérieur de la chambre de chauffage (302) et ayant un trou (904), et **en ce qu'**il comprend en outre :
• un module de connexion (602A, 602B) comprenant :
∘ une structure de connexion (702A, 704A, 802B, 804B) comprenant une broche de connexion (706A, 708A, 806A, 808A) connectée à la carte de circuit imprimé (202) et un connecteur (710A, 712A, 810B, 812B) connecté à la borne (502A, 504A, 502B, 504B) de la résistance (410A, 410B),
∘ un surmoulage (714A, 814B) autour de la structure de connexion (702A, 704A, 802B, 804B), le surmoulage (714A, 814B) ayant un trou traversant (906) dans lequel la broche de positionnement (902) est insérée, et
∘ un manchon (914) inséré dans le trou traversant (906) à côté de la broche de positionnement (902) ; et
• un élément de fixation (604) comprenant une tige (916) et une tête (918), la tige (916) étant insérée successivement dans le manchon (914) et le trou (904) de la broche de positionnement (902), de sorte que le manchon (914) est serré entre la broche de positionnement (902) et la tête (918).

2. Dispositif de chauffage (100) selon la revendication 1, dans lequel la paroi (402A, 402B) est un couvercle amovible recouvrant une ouverture (403A, 403B) à travers laquelle la résistance (410A, 410B) peut être insérée dans la chambre de chauffage (302).

3. Dispositif de chauffage (100) selon la revendication 1 ou 2, dans lequel l'élément de fixation (604) est une vis ou un rivet ou un boulon.

4. Dispositif de chauffage (100) selon l'une quelconque des revendications 1 à 3, dans lequel le manchon (914) est en acier.

5. Dispositif de chauffage (100) selon l'une quelconque des revendications 1 à 4, dans lequel, à l'intérieur du trou traversant (906) du surmoulage (714A, 814B), la broche de positionnement (902) s'étend à moins de 0,2 mm du surmoulage (714A, 814B) dans au moins une direction (X, Y) transversale à une direction longitudinale (Z) de la broche de positionnement (902).

6. Dispositif de chauffage (100) selon l'une quelconque des revendications 1 à 5, dans lequel l'un parmi la broche de positionnement (902) et le trou traversant (906) du surmoulage (714A, 814B), a une forme tronconique, tandis que l'autre a une forme cylindrique.

7. Dispositif de chauffage (100) selon l'une quelconque des revendications 1 à 6, comprenant en outre un boîtier (102) comprenant la chambre de chauffage (302) et délimitant un espace intérieur (204), dans lequel s'étend la chambre de chauffage (302).

8. Dispositif de chauffage (100) selon la revendication 7, dans lequel la carte de circuit imprimé (202) s'étend dans l'espace intérieur (204).

9. Véhicule comprenant un dispositif de chauffage (100) selon l'une quelconque des revendications 1 à 8, en particulier dans une installation du véhicule, pour chauffer l'air d'un habitacle du véhicule.

10. Procédé (1000) pour connecter, dans un dispositif de chauffage (100) selon les revendications 1-8, une borne (502A, 504A, 502B, 504B) d'une résistance (410A, 410B) située dans une chambre de chauffage (302) pourvue d'une entrée de liquide de refroidissement (406) pour laisser entrer le liquide de refroidissement et d'une sortie de liquide de refroidissement (408) pour laisser sortir le liquide de refroidissement, la borne (502A, 504A, 502B, 504B) traversant une paroi (402A, 402B) de la chambre de chauffage (302), à une carte de circuit imprimé (202) située à l'extérieur de la chambre de chauffage (302) pour commander la résistance (410A, 410B),
**caractérisé en ce que** la paroi (402A, 402B) est pourvue d'une broche de positionnement (902) faisant saillie à l'extérieur de la chambre de chauffage (302) et ayant un trou (904), et **en ce que** le procédé comprend :
• la fixation (1008) d'un module de connexion (602A, 602B) à la paroi (402A, 402B) en insérant une broche de positionnement (902) de la paroi (402A, 402B) faisant saillie à l'extérieur de la chambre de chauffage (302) dans un trou traversant (906) prévu dans un surmoulage (714A, 814B) autour d'une structure de connexion (702A, 704A, 802B, 804B) du module de connexion, tout en connectant la borne (502A, 504A, 502B, 504B) à un connecteur (502A, 504A, 502B, 504B) de la structure de connexion (702A, 704A, 802B, 804B) ;
• l'insertion (1010) d'une tige (916) d'un élément de fixation (604) successivement dans un manchon (914) situé à l'intérieur du trou traversant (906) et un trou (904) de la broche de positionnement (902), de sorte que le manchon (914) est serré entre la broche de positionnement (902) et une tête (918) de l'élément de fixation (604) située à une extrémité de la tige (916) ;
• et
• la fixation (1012) de la carte de circuit imprimé (202) à la chambre de chauffage (302), tout en connectant une broche (706A, 708B, 806B, 808B) de la structure de connexion (702A, 704A, 802B, 804B) à la carte de circuit imprimé (202).
